(19) Europäisches Patentamt
European Patent Office
Office européen des brevets

(11) Veröffentlichungsnummer: **0 279 277 B1**

(12) **EUROPÄISCHE PATENTSCHRIFT**

(45) Veröffentlichungstag der Patentschrift: **06.05.92**

(51) Int. Cl.⁵: **C09B 62/51**, D06P 1/384

(21) Anmeldenummer: **88101527.5**

(22) Anmeldetag: **03.02.88**

Die Akte enthält technische Angaben, die nach dem Eingang der Anmeldung eingereicht wurden und die nicht in dieser Patentschrift enthalten sind.

(54) **Wasserlösliche Monoazo-pyrazolon-Verbindungen, Verfahren zu ihrer Herstellung und ihre Verwendung als Farbstoffe.**

(30) Priorität: **06.02.87 DE 3703565**

(43) Veröffentlichungstag der Anmeldung:
**24.08.88 Patentblatt 88/34**

(45) Bekanntmachung des Hinweises auf die Patenterteilung:
**06.05.92 Patentblatt 92/19**

(84) Benannte Vertragsstaaten:
**BE CH DE ES FR GB IT LI**

(56) Entgegenhaltungen:
**FR-A- 1 401 032**
**FR-A- 2 022 116**
**FR-A- 2 248 301**

(73) Patentinhaber: **HOECHST AKTIENGESELLSCHAFT**
**Postfach 80 03 20**
**W-6230 Frankfurt am Main 80(DE)**

(72) Erfinder: **Schläfer, Ludwig, Dr.**
**Königsberger Strasse 40**
**W-6233 Kelkheim (Taunus)(DE)**
Erfinder: **Schwaiger, Günther, Dr.**
**Johannesallee 41**
**W-6230 Frankfurt am Main 80(DE)**
Erfinder: **Russ, Werner Hubert, Dr.**
**Berliner Strasse 10**
**W-6238 Hofheim am Taunus(DE)**

**EP 0 279 277 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem Gebiet der faserreaktiven Azofarbstoffe.

In der britischen Patentschrift Nr. 1 268 699 sind Monoazoverbindungen mit einer 1-Phenyl-pyrazol-5-on-Kupplungsponente beschrieben; sie enthalten eine oder zwei β-Phosphatoethylsulfonyl-Gruppen als faserreaktive(r) Rest(e) an den 1-Phenyl-Rest der Kupplungskomponente oder an den Benzolrest der Diazokomponente oder an beide gebunden. Diese bekannten, als faserreaktive Farbstoffe verwendbaren Monoazoverbindungen besitzen jedoch ein nur geringes Ziehvermögen und können nach einem der technisch wichtigsten Färbevergahren, nämlich dem Ausziehverfahren aus langer Flotte, nicht eingesetzt werden.

Eine Verbindung ähnlicher Konstitution ist aus dem Beispiel 6 der deutschen Offenlegungsschrift Nr. 2 362 683 bekannt, die jedoch in Wasser völlig unlöslich ist und sich lediglich als Dispersionsfarbstoff zum Färben eines Baumwoll-/Polyester-Mischgewebes bei Färbetemperaturen von 130 °C eignet. Auf Baumwolle liefert sie nach den für wasserlösliche, faserreaktive Farbstoffe üblichen Färbe- und Druckverfahren nur schwache und unegale Färbungen und Drucke.

Des weiteren sind aus der britischen Patentschrift Nr. 1 336 454 Monoazoverbindungen mit einer 1-Phenyl-pyrazolon5-on-Kupplungskompnente bekannt, dern 1-Phenyl-Rest durch eine faserreaktive β-Sulfatoethylsulfonyl-, β-Thiosulfatoethylsulfonyl- oder Vinlysulfonyl-Gruppe substituiert ist. Diese bekannten Monoazofarbstoffe besitzen jedoch ein Fixiervermögen, das bei den heutigen Anforderungen an faserreaktive Farbstoffe noch verbesserungswürdig erschien und technisch nicht mehr vollauf befriedigt.

Weiterhin werden in der französischen Patentschrift Nr. 1 401 032 Farbstoffe, auch solche mit einem Phenylazo-(1-phenyl)-pyrazol-5-on-Chromophor, beschrieben, die als faserreaktive Gruppe die β-Thiosulfatoethylsulfonyl-Gruppe besitzen und zum Färben und Bedrucken von hydroxygruppenhaltigen Fasermaterialien geeignet sind. Desweiteren werden in derfranzösischen Patentanmeldungs-Veröffentlichung Nr. 2 248 301 Farbstoffe mit einer 2,4-Disulfo-anilin-Diazokomponente, die in 5-Stellung eine faserreaktive Gruppe der Vinylsulfonreihe besitzt, beschrieben, wobei als eine der möglichen Kupplungskomponenten für diese Azofarbstoffe solche aus der Pyrazol-5-on-Reihe erwähnt werden.

Mit der vorliegenden Erfindung wurden nunmehr Monoazoverbindungen entsprechend der allgemeinen Formel (1)

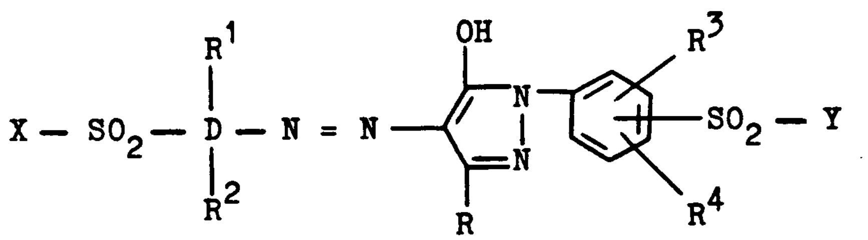

(1)

gefunden, die verbesserte faserreaktive Farbstoffeigenschaften besitzen.

In Formel (1) bedeuten:

D ist ein Benzolring oder ein Rest der allgemeinen Formel (2)

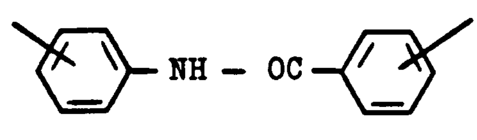

(2),

$R^1$ ist Wasserstoff, Methyl, Ethyl, Methoxy, Ethoxy, Chlor, Brom, Carboxy oder Sulfo,

$R^2$ ist Wasserstoff, Methyl, Ethyl, Methoxy, Ethoxy, Chlor oder Brom,

$R^3$ ist Wasserstoff, Methyl, Ethyl, Methoxy, Ethoxy, Chlor, Brom, Carboxy oder Sulfo und

$R^4$ ist Wasserstoff, Methyl, Ethyl, Methoxy, Ethoxy, Chlor oder Brom,

wobei $R^1$, $R^2$, $R^3$ und $R^4$ zueinander gleiche oder voneinander verschiedene Bedeutungen besitzen können;

R ist Carboxy oder Carbalkoxy von 2 bis 5 C-Atomen, wie Carbethoxy und Carbomethoxy;

X ist eine β-Thiosulfatoethyl-Gruppe oder bevorzugt eine β-Sulfatoethyl-Gruppe oder

X ist die Vinylgruppe, wobei jedoch $R^1$ oder $R^3$ oder beide zwingend jeweils für eine Sulfogruppe stehen, und

Y ist eine β-thiosulfatoethyl-Gruppe oder bevorzugt eine β-Sulfatoethyl-Gruppe oder

Y ist die Vinylgruppe, wobei jedoch $R^1$ oder $R^3$ oder beide zwingend jeweils für eine Sulfogruppe stehen,

wobei die beiden Gruppen $-SO_2-X$ und $-SO_2-Y$ zueinander gleiche oder voneinander verschiedene Bedeutungen haben können und wobei eide Gruppen an den jeweiligen Benzolkern bevorzugt in meta- oder para-Stellung zur Azogruppe bzw. zum Stickstoffatom der Carbamoylgruppe des Restes der Formel (2) bzw. zum $N^1$ -Atom des Pyrazolons gebunden sind.

Bevorzugt sind in den Verbindungen (1) die Formelreste X und Y beide gleichzeitig eine β-Sulfatoethyl-Gruppe. Bevorzugt sind weiterhin Verbindungen der Formel (1) mit $R^1$ gleich Wasserstoff, des weiteren solche mit $R^3$ gleich Wasserstoff.

Bevorzugt sind ebenfalls Verbindungen der allgemeinen Formel (1), in welcher $R^1$ ein Wasserstoffatom, eine Methyloder Methoxy- oder Sulfogruppe oder ein Chloratom bedeutet und $R^2$ ein Wasserstoffatom oder eine Methoxygruppe ist, des weiteren Verbindungen der Formel (1), in welcher $R^3$ ein Wasserstoffatom oder eine Methyl- oder Methoxygruppe und $R^4$ ein Wasserstoffatom oder eine Methoxygruppe bedeutet.

In den vorstehenden und nachstehenden Angaben sind Sulfogruppen Gruppen entsprechend der allgemeinen Formel $-SO_3M$, Carboxygruppen Gruppen entsprechend der allgemeinen Formel -COOM, Thiosulfatogruppen Gruppen entsprechend der allgemeinen Formel $-S-SO_3M$ und Sulfatogruppen Gruppen entsprechend der allgemeinen Formel $-OSO_3M$, wobei

M jeweils ein Wasserstoffatom oder ein Alkalimetall, wie Natrium, Kalium oder Lithium, bedeutet.

Die erfindungsgemäßen Monoazoverbindungen können in Form ihrer Säureverbindungen und in Form ihrer Salze vorliegen; bevorzugt sind sie in Form der Alkalisalze und finden bevorzugt in Form dieser Salze Verwendung zum Färben (einschließlich Bedrucken) von hydroxy- und/oder caronamidgruppenhaltigen Materialien, insbesondere Fasermaterialien.

Die vorliegende Erfindung betrifft weiterhin Verfahren zur Herstellung der neuen Verbindungen der allgemeinen Formel (1). Sie können erfindungsgemäß hergestellte werden, indem man ein Diazoniumsalz eienr aromatischen Aminoverbindung entsprechend der allgemeinen Formel (3)

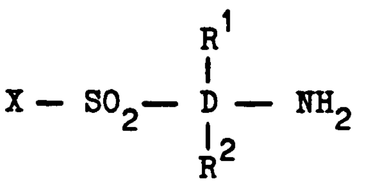

(3)

in welcher D, $R^1$, $R^2$ und X die obengenannten Bedeutungen haben oder X für die β-Hydroxyethyl-Gruppe steht, mit einer Verbindung entsprechend der allgemeinen Formel (4)

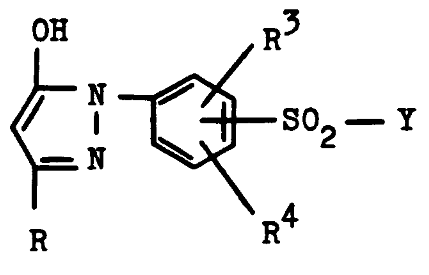

(4)

in welcher R, $R^3$, $R^4$ und Y die obengenannten Bedeutungen haben oder Y für die Hydroxyethyl-Gruppe steht, kuppelt und im Falle, daß X oder Y oder beide eine β-Hydroxyethyl-Gruppe darstellen, die erhaltene Monoazoverbindung mittels eines üblichen Sulfatisierungsmittels, wie beispielsweise 95 bis 100 %ige Schwefelsäure, Schwefeltrioxid enthaltende Schwefelsäure oder Chlorsulfonsäure, beispielsweise bei einer Temperatur zwischen 0 und 25 °C, in die Verbindung (1) mit der entsprechenden β-Sulfatoethylsulfonyl-Gruppe überführt.

Erfindungsgemäße Azoverbindungen, bei denen der Rest der Diazokomponente identisch mit dem in 1-Stellung der Pyrazol-5-on-Kupplungskomponente gebundenen Phenylrest ist, wie Verbindungen entsprechend einer allgemeinen Formel (1a)

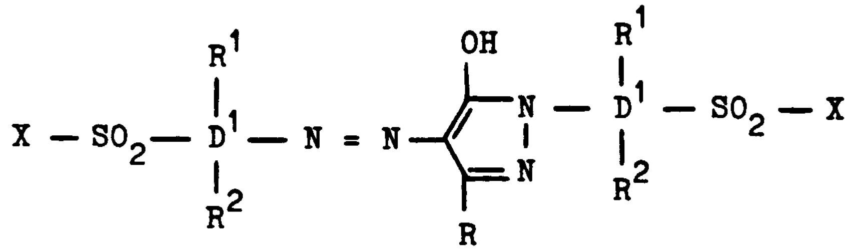

(1a)

in welcher R die obengenannte Bedeutung hat, beide $D^1$ jeweils einen Benzolring bedeuten und die Substituenten $R^1$, $R^2$ und $-SO_2-X$ an $D^1$ jeweils die obengenannten Bedeutungen haben, wobei beide durch $R^1$, $R^2$ und $-SO_2-X$ substituierten Benzolreste eine zueinander identische Konstituition besitzen, können erfindungsgemäß auch so hergestellt werden, daß man ein Diazoniumsalz eines aromatischen Amins der allgemeinen Formel (3a)

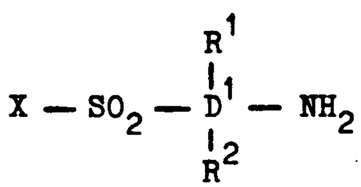

(3a)

in welcher $D^1$, $R^1$, $R^2$ und X die obengenannten Bedeutungen haben, in zweifach molarer Menge mit einem Acetylbernsteinsäure-dialkylester mit Alkylgruppen von jeweils 1 bis 4 C-Atomen, bevorzugt mit jeweils 1 oder 2 C-Atomen, umsetzt und im Falle, daß beide X eine $\beta$-HuydroxyethylGruppe darstellen, die erhaltene Monoazoverbindung mittels eines üblichen Sulfatisierungsmittels, wie beispielsweise 95 bis 100 %ige Schwefelsäure, Schwefeltrioxid enthaltende Schwefelsäure oder Chlorsulfonsäure, beispielsweise bei einer Temperatur zwischen 0 und 25 °C, in die $\beta$-Sulfatoethylsulfonyl-Verbindung der Formel (1) überführt.

Die Kupplungsreaktion einer Verbindung der allgemeinen Formel (4) mit dem Diazoniumsalz eines aromatischen Amins der allgemeinen formel (3) erfolgt analog den übichen und bekannten Verfahrensweisen, so beispielsweise in wäßrigem Medium bei einem pH-Wert zwischen 4 und 7,5, bevorzugt zwischen 4 und 7, und bei einer Temperatur zwischen 0 und 35 °C, bevorzugt zwischen 10 und 25 °C, wobei, sofern X und Y beide $\beta$-Hydroxyethyl-Gruppen sind, die Kupplung auch im schwach alkalischen Bereich, wie zwischen 7,5 und 9, durchgeführt werden kann.

Bei der Synthese von Verbindungen entsprechend der allgemeinen Formel (1) durch Umsetzung von 2 Mol eines Diazoniumsalzes eines Amins der Formel (3) bzw. (3a) mit einem Mol eines Acetylbernsteinsäure-dialkylesters verfährt man vorteilhaft in der Weise, daß man den Acetylbernsteinsäure-dialkylester zu einer wäßrigen, auf einen pH-Wert von 4,5 bis 5,5, eingestellten Suspension oder Lösung der zweifach molaren Menge eines Diazoniumsalzes des aromatischen Amins bei einer Temperatur zwischen 5 und 25 °C und bei einem pH-Wert zwischen 3,5 und 5,5, bevorzugt zwischen 4 und 5 hinzugibt und die Umsetzung nach einiger Zeit bei einem pH-Wert zwischen 6 und 7,5 und einer Temperatur zwischen 15 und 25 °C weiter- und zu Ende führt. Bei dieser Verfahrensweise erfolgt zunächst Kupplung eines Mols des Diazoniumsalzes mit der Acetylbernsteinsäure und Ringschluß zum Pyrazolon, sodann Kupplung des gebildeten Pyrazolons mit dem zweiten Mol des Diasoniumsalzes zur erfindungsgemäßen Monoazoverbindung. Ist in der Ausgangsvberbindung (3a) die Gruppe X eine $\beta$-Hydroxyethyl-Gruppe, so kann die Kupplung auch im alkalischen Bereich, so bei einem pH-Wert zwischen 6,5 und 9, durchgeführt werden. Diese Eintopf-Verfahrensweise ist der in der U.S.-Patentschrift 2 457 823 beschriebenen analog.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) - im nachfolgenden als Verbindungen (1) bezeichnet -haben faserreaktive Eigenschaften und besitzen wertvolle Farbstoffeigenschaften. Sie können deshalb zum Färben (einschließlich Bedrucken) von natürlichen, regenerierten oder synthetischen hydroxygruppenhaltigen und/oder carbonamidgruppenhaltigen Materialien, beispielsweise in Form von Flächengebilden, wie Papier und Leder oder von Polyamid oder Polyurethan, insbesondere aber von solchen Materialien in Faserform, wie Cellulosefasermaterialien, Seide, Wolle und synthetische Polyamid- und Polyurethanfasern, verwendet werden. Auch können die bei der Synthese der Verbindungen (1) anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Die Verbindungen (1) lassen sich, gemäß der erfindungsgemäßen Anwendung, auf den genannten Substraten, insbesondere auf den genannten Fasermaterialien, nach den für wasserlösliche, insbesondere faserreaktive, Farbstoffe bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert, Solche Färbeund Fixierweisen sind in der Literatur zahlreich beschrieben, wie beispielsweise in der deutschen Offenlegungschrift Nr. 3 025 572.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Farnen, Wickelkörpern und Geweben. Hierbei kann man analog bekannten Verfahrensweisen der Applikation und Fixierung von faserreaktiven Farbstoffen vorgehen.

Die erfindungsgemäßen Monoazoverbindungen zeichnen sich durch eine hohe Farbstärke und einen guten Farbaufbau aus; sie liefern demgemäß farbstarke Färbungen und Drucke von gelber Nuance. Insbesondere ihre Färbungen und Drucke auf Cellulosefasermaterialien besitzen gut Gebrauchs- und Fabrikationsechtheiten, wie beispielsweise gute Licht-, Wasch-, Chlorbadewasser-, Abgas-, Bügel-, Plissier-, Dekatier-, Trockenreinigungs-, Reib-, Säure-, Alkaliund Überfärbeechtheiten sowie gute alkalische und saure Schweißechtheiten. Die Fixiergrade der erfindungsgemäßen Verbindungen sind sehr hoch, weswegen der nicht fixierte Anteil an der erfindungsgemäßen Verbindung nur gering ist und demgemäß beim Fertigstellen von Färbungen und Drucken nur wenig von dieser angewendeten Farbstoffverbindung mit dem Spül- oder Waschwasser ins Abwasser gelangt. Die erfindungsgemäßen Monoazoverbindungen liefern beim Druck scharfe Konturen mit einem klaren Weißfond; die Drucke und Färbungen flecken auf beiliegendem Material nicht ab bzw. bluten nicht aus und zwigen eine hohe Säurelagerbeständigkeit. Darüber hinaus sind die erfindungsgemäßen Verbindungen nicht phototrop.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetalsalze, wie Natrium- oder Kaliumsalze, in die Synthese eingesetzt werden.

Die im sichtbaren bereich angegebenen Absorptionsmaxima ($\lambda_{max}$-Werte) wurden aus wäßriger Lösung der Alkalimetallsalze bestimmt.

Beispiel 1

Eine neutrale Lösung des Natriumsalzes von 28,1 Teilen 4-(β-Sulfatoethylsulfonyl)-anilin und 6,9 Teilen Natriumnitrit in 100 Teilen Wasser gibt man bei 10°C unter kräftigem Rühren in ein Gemisch aus 100 Teilen Eis und 35 Teilen einer 30%igen wäßrigen Salzsäure. Man rührt noch eine Stunde nach und stellt die Suspension des Diazoniumsalzes mit Natriumcarbonat auf einen pH-Wert von 5 und gibt sodann langsam während 30 Minuten 11.4 Teile Acetylbernsteinsäure-diethylester hinzu, wobei man die Reaktionstemperatur bei 10 bis 15°C und den pH-Wert zwischen 4 und 5 hält. Man rührt noch eine Stunde nach, erhöht den pH-Wert auf 6 bis 6,5, rührt noch weitere 5 Stunden bei 20 bis 25°C nach, stellt das Reaktionsgemisch auf einen pH-Wert von 4, klärt mit 10 Teilen Aktivkohle, filtriert und dampft das Filtrat ein oder sprühtrocknet es.

Man erhält das erfindungsgemäße Natriumsalze der Verbindung der Formel

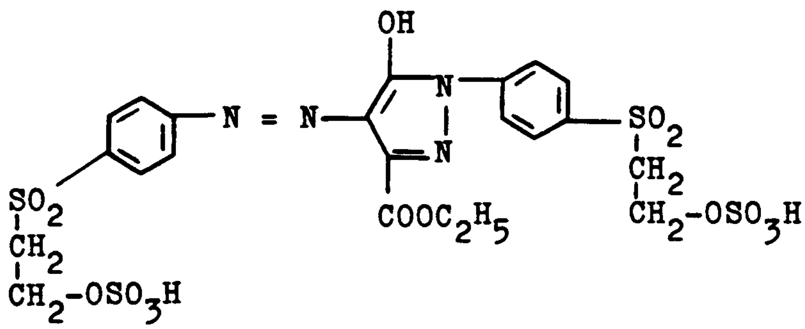

($\lambda_{max}$ = 418 nm)

in Form eines elektrolythaltigen Produktes. Diese erfindungsgemäße Monoazoverbindung besitzt sehr gute faserreaktive Farbstoffeigenschaften und liefert nach den üblichen Färbe- und Druckverfahren für faserreaktive Farbstoffe auf den in der Beschreibung genannten Materialien, wie insbesondere Cellulosefasermaterialien, neutrale, gelbe Färbungen und Drucke in sehr guter Farbausbeute.

Die erfindungsgemäß erhältlichen Färbungen und Drucke zeichnen sich durch hervorragende Lichtechtheiten sowohl in trockenem Zustand als auch mit Trinkwasser oder mit einer alkalischen oder sauren Schweißlösung befeuchteten Zustand, desweiteren durch gute Waschechtheiten (wie bei der 60°C- und 95°C-Wäsche), durch eine sehr gute Wasserechtheit, durch sehr gute alkalische und saure Schweißechtheiten, durch sehr gute alkalische und saure Überfärbeechtheiten sowie durch eine gute Säurelagerbeständigkeit aus.

Beispiel 2

Die erfindungsgemäße Monoazoverbindung von Beispiel 1 kann auch wie folgt hergestellt werden:
Man bereitet gemäß der Verfahrensweise des Beispieles 1 eine wäßrige Diazoniumsalzsuspension aus 28,1 Teilen 4-(β-Sulfatoethylsulofnyl)-anilin und versetzt sie mit 22,7 Teilen Acetylbernsteinsäure-diethylester, stellt sodann den pH mit Natriumcarbonat auf einen Wert von 4,5 und rührt das Reaktionsgemisch bei diesem pH und einer Temperatur von 0 bis 25°C nach, bis kein Diazoniumsalz mehr nachweisbar ist, erhöht sodann den pH-Wert auf 6 bis 7,5 und führt die Cyclisierungsreaktion noch mehrere Stunden bei 20 bis 25°C weiter.

Zu dieser wäßrigen Lösung der Kupplungskomponente 1-[4'-(β-Sulfatoethylsulfonyl)-phenyl]-3-carbethoxypyrazol-5-on gibt man nochmals die gemäß Beispiel 1 hergestellte Diazoniumsalzsuspension aus 28,1 Teilen 4-(β-Sulfatoethylsulfonyl)-anilin hinzu, stellt einen pH-Wert von 5 bis 6 ein rührt bis zur Beendigung der Kupplungsreaktion weiter.

Die erfindungsgemäße Monoazoverbindung wird in der im Beispiel 1 angegebenen Weise isoliert. Sie besitzt dieselben guten faserreaktiven Farbstoffeigenschaften.

Beispiel 3

Zur Herstellung einer erfindungsgemäßen Monoazoverbindung hydrolysiert man zunächst 24,8 Teile 4-(β-Hydroxyethylsulfonyl)-acetanilid durch zweistündiges Kochen in wäßriger, salzsaurer Lösung (50 Teile Wasser und 25 Teile konzentrierte Salzsäure), läßt sodann abkühlen, gibt 30 Teile eis hinzu und diazotiert mittels 18,5 Teilen einer 40%igen wäßrigen Natriumnitritlösung. Man rührt die Diazoniumsalzsuspension noch eine Stunde nach, erhöht den pH-Wert auf 3 und gibt sodann 4 Teile Natriumbicarbonat und 22,7 Teile Acetylbernsteinsäurediethylester hinzu. Das reaktionsgemisch wird noch 10 Stunden bei einer Temperatur von 10 bis 20°C und einem pH-Wert zwischen 3 und 4 gerührt, bis die Anwesenheit des Diazoniumsalzes nicht mehr nachweisbar ist, stellte es sodann auf einen pH-Wert von 11, erwärt es auf 80°C und rührt bei dieser Temperatur und diesem pH noch eine Stunde nach. Der Ansatz wird sodann mit zwei Teilen Natriumdithionit entfärbt und aschließend filtriert. Das Filtrat wird mit 100 Teilen Eiswasser versetzt und mittels 46 Teilen einer 30%igen wäßrigen Salzsäure auf einen pH-Wert von 2,5 gestelte. Das ausgefallene, synthetisierte 1-[4'-(β-Hydroxyethylsulfonyl)-phenyl]-3-carboxy-pyrazol-5-on wird abgesaugt und getrocknet und sodann bei 15 bis 25°C in ein Gemisch aus 65 Teilen 100%iger Schwefelsäure und 10 Teile 50%igem

Oleum eingetragen und verrührt, bis eine klare Lösung erhalten ist, die man auf 300 Teile Eis gibt und mit etwa 90 Teilen Calciumcarbonat auf einen pH-Wert von 4,5 einstellt, auf 80 ° C erwärmt, das ausgefallene Calciumsulfat absaugt und mit 200 Teilen heißem Wasser nafhwäscht.

Zu dem mit dem Waschwasser vereinigten Filtrat, das das 1-[4'-(β-Sulfatoethylsulfonyl)-phenyl]-3-carboxy-pyrazol-5-on gelöst enthält, gibt man eine auf üblichem Wege hergestellte Diazoniumsalzlösung aus 24,5 Teilen 2-Brom-4-(β-sulfatoethylsulfonyl)-anilin und führt die Kupplungsreaktion bei einer Temperatur zwischen 20 und 25 ° C und einem pH-Wert zwischen 5 und 6 aus.

Die erhaltene erfindungsgemäße Monoazoverbindung wird mit Natriumchlorid ausgesalzen. Man erhält sie als Natriumsalz in Form eines elektrolythaltigen (vorwiegend natriumchloridhaltigen) Produktes; sie besitzt, in Form der freien Säure geschrieben, die Formel

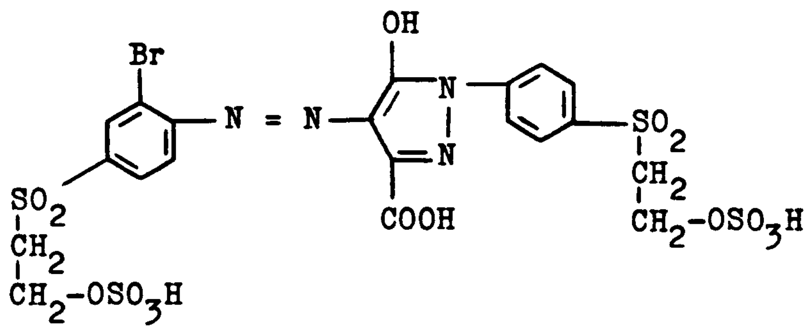

($\lambda_{max}$ = 410 nm)

und zeigt sehr gute faserreaktive Farbstoffeigenschaften; sie färbt die der Beschreibung genannten Fasermaterialien, wie insbesondere Cellulosefasermaterialien, nach den in der Technik üblichen Applikations- und Fixiermethoden für faserreaktive Farbstoffe in farbstarken, gelben Farbtönen. Die erfindungsgemäße Verbindung besitzt ein sehr hohes Fixiervermogen, und die mit ihr erhältlichen Färbungen und Drucke haben gute bis sehr gute Echtheitseigenschaften, wie beispielsweise solche, die für die erfindungsgemäße Monoazoverbindung des Beispieles 1 genannt werden.

Beispiel 4

Zur Herstellung einer erfindungsgemäßen Monoazoverbindung mit der β-Thiosulfatoethylsulfonyl-Gruppe stellt man eine Lösung von 35,6 Teilen der in Beispiel 1 beschriebenen Monozaoverbindung in 200 Teilen Wasser mit einer wäßrigen Natriumhydroxidlösung bei einer Temperatur von 20 ° C auf einen pH-Wert zwischen 10 und 11, rührt die entstandene Suspension noch 5 Munuten nach, gibt sodann 17,4 Teile Natriumthiosulfat hinzu, stellt den pH mittels Essigsäure auf einen Wert zwischen 5 und 6 ein, erwärmt den Reaktionsansatz auf 60 bis 70 ° C und rührt noch 6 Stunden innerhalb diese pH-Bereiches nach. Anschließend wird das Reaktionsgemisch in üblicher Weise heiß geklärt und das Filtrat eingedampft oder sprühgetrocknet.

Man erhält ein elektrolytsalzhaltiges gelbes Pulver mit dem erfindungsgemäßen Natriumsalz der Verbindung der Formel

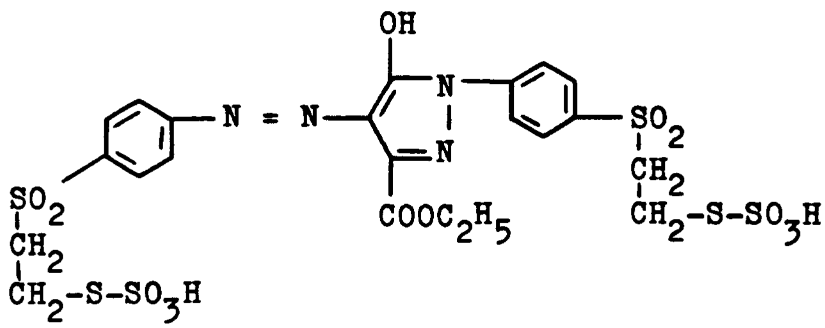

($\lambda_{max}$ = 419 nm).

Diese erfindungsgemäße $\beta$-Thiosulfatoethylsulfonyl-Monoazoverbindungbesitzt ebenfalls sehr gute faserreaktive Farbstoffeigenschaften und liefert auf den in der Beschreibung genannten Fasermaterialien, insbesondere Cellulosefasermaterialien, nach den in der Tecknik üblichen Färbe- und Druckverfahren Färbungen und Drucke in farbstarken, neutral gelben Nuancen mit den gleichen guten bis sehr guten Echtheitseigenschaften, wie sie für die erfindungsgemäße $\beta$-Sulfatoethylsulfonyl-Monoazoverbindung des Beispieles 1 beschrieben sind.

Beispiele 5 bis 85

In den nachfolgenden Tabellenbeispielen sind weitere erfindungsgemäße Monoazoverbindung mit Hilfe der Komponenten entsprechend einer allgemeinen Formel (A)

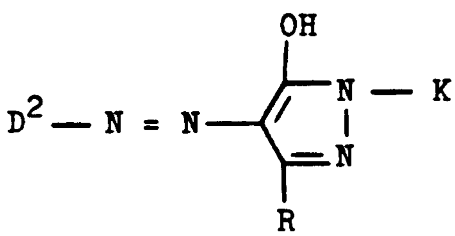

(A)

beschrieben. Sie lassen sich in erfindungsgemäßer Weise, beispielsweise nach einem der obigen Ausführungsbeispiele, mittels der aus dem jeweiligen Tabellenbeispiel in Verbindung mit Formel (A) ersichtlichen Komponenten, wie der Diazokomponente $D^2$ -$NH_2$ und der Kupplungskomponente entsprechend der allgemeinen Formel (B)

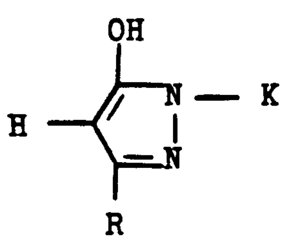

(B)

herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke, echte Färbungen und Drucke in den in dem jeweiligen Tabellenbeispiel für Färbungen auf Baumwolle angegbenen Farbtönen.

| Bsp. | Monoazoverbindung der Formel (A) Rest $D^2$ | Rest R | Rest K | Farbton ($\lambda_{max}$=..nm) |
|---|---|---|---|---|
| 5 | 3-(ß-Sulfatoethyl-sulfonyl)-phenyl | Carb-ethoxy | 4'-(ß-Sulfato-ethylsulfonyl)-phenyl | gelb (420) |
| 6 | 2-Methoxy-5-(ß-sul-fatoethylsulfonyl)-phenyl | dito | dito | gelb (436) |
| 7 | 2-Methoxy-5-methyl-4-(ß-sulfatoethylsul-fonyl)-phenyl | dito | dito | gelb (446) |
| 8 | 2,5-Dimethoxy-4-(ß-sulfatoethylsulfonyl)-phenyl | dito | dito | gelb (456) |
| 9 | 2-Methoxy-5-chlor-4-(ß-sulfatoethylsulfo-nyl)-phenyl | dito | dito | gelb |
| 10 | 2-Methoxy-4-(ß-sul-fatoethylsulfonyl)-phenyl | dito | dito | gelb |
| 11 | 4-Methoxy-5-(ß-sul-fatoethylsulfonyl)-phenyl | dito | dito | gelb |
| 12 | 2-Chlor-5-(ß-sulfato-ethylsulfonyl)-phenyl | dito | dito | gelb |
| 13 | 2-Brom-4-(ß-sulfato-ethylsulfonyl)-phenyl | dito | dito | gelb (412) |
| 14 | 4-Chlor-5-(ß-sulfato-ethylsulfonyl)-phenyl | dito | dito | gelb |
| 15 | 4-{N-[3'-(ß-sulfato-ethylsulfonyl)-phenyl]-carbamoyl}-phenyl | dito | dito | gelb (426) |
| 16 | 2-Sulfo-5-(ß-sulfato-ethylsulfonyl)-phenyl | dito | dito | gelb |
| 17 | 2-Sulfo-4-(ß-sulfato-ethylsulfonyl)-phenyl | dito | dito | gelb |
| 18 | 2,6-Dichlor-4-(ß-sul-fatoethylsulfonyl)-phenyl | dito | dito | gelb |

| Bsp. | Monoazoverbindung der Formel (A) Rest $D^2$ | Rest R | Rest K | Farbton ($\lambda_{max}$=..nm) |
|---|---|---|---|---|
| 19 | 4-Methoxy-5-(ß-sulfatoethylsulfonyl)-phenyl | Carbomethoxy | 4'-(ß-Sulfatoethylsulfonyl)-phenyl | gelb (435) |
| 20 | 4-(ß-Sulfatoethyl-ethylsulfonyl)-phenyl | dito | dito | gelb |
| 21 | 3-(ß-Sulfatoethyl-ethylsulfonyl)-phenyl | dito | dito | gelb |
| 22 | 2-Methoxy-5-(ß-sulfatoethylsulfonyl)-phenyl | dito | dito | gelb |
| 23 | 2-Methoxy-5-methyl-4-(ß-sulfatoethylsulfonyl)-phenyl | dito | dito | gelb (445) |
| 24 | 2,5-Dimethoxy-4-(ß-sulfatoethylsulfonyl)-phenyl | dito | dito | gelb (455) |
| 25 | 2-Chlor-5-(ß-sulfatoethylsulfonyl)-phenyl | dito | dito | gelb |
| 26 | 2-Brom-4-(ß-sulfatoethylsulfonyl)-phenyl | dito | dito | gelb (412) |
| 27 | 4-(ß-Sulfatoethylsulfonyl)-phenyl | Carboxy | dito | gelb (419) |
| 28 | 3-(ß-Sulfatoethylsulfonyl)-phenyl | dito | dito | gelb (417) |
| 29 | 2-Methoxy-5-(ß-sulfatoethylsulfonyl)-phenyl | dito | dito | gelb (441) |
| 30 | 2-Methoxy-5-methyl-4-(ß-sulfatoethylsulfonyl)-phenyl | dito | dito | gelb (447) |
| 31 | 2,5-Dimethoxy-4-(ß-sulfatoethylsulfonyl)-phenyl | dito | dito | gelb (450) |
| 32 | 2-Methoxy-4-(ß-sulfatoethylsulfonyl)-phenyl | dito | dito | gelb |
| 33 | 4-Methoxy-5-(ß-sulfatoethylsulfonyl)-phenyl | dito | dito | gelb (436) |

| Bsp. | Monoazoverbindung der Formel (A) Rest $D^2$ | Rest R | Rest K | Farbton ($\lambda_{max}$=..nm) |
|---|---|---|---|---|
| 34 | 2-Chlor-5-(ß-sulfatoethylsulfonyl)-phenyl | Carboxy | 4'-(ß-Sulfato-ethylsulfonyl)-phenyl | gelb (435) |
| 35 | 2-Brom-4-(ß-sulfato-ethylsulfonyl)-phenyl | dito | dito | gelb (416) |
| 36 | 4-{N-[3'-(ß-Sulfato-ethylsulfonyl)-phenyl]-carbamoyl}-phenyl | dito | dito | gelb (427) |
| 37 | 2-Sulfo-5-(ß-sulfatoethylsulfonyl)-phenyl | dito | dito | gelb |
| 38 | 2-Sulfo-4-(ß-sulfatoethylsulfonyl)-phenyl | dito | dito | gelb |
| 39 | 2-Carboxy-5-(ß-sulfatoethylsulfonyl)-phenyl | dito | dito | gelb |
| 40 | 2-Carboxy-4-(ß-sulfato-ethylsulfonyl)-phenyl | dito | dito | gelb |
| 41 | 4-(ß-Thisulfato-ethylsulfonyl)-phenyl | dito | dito | gelb |
| 42 | dito | Carb-ethoxy | dito | gelb (420) |
| 43 | dito | Carbo-methoxy | dito | gelb |
| 44 | dito | Carboxy | 4'-(ß-Thiosulfatoethylsulfonyl)-phenyl | gelb (421) |
| 45 | dito | Carb-ethoxy | dito | gelb |
| 46 | 2,5-Dimethoxy-5-(ß-sulfatoethylsulfonyl)-phenyl | Carboxy | 2'-Methoxy-5'-(ß-sulfatoethyl-sulfonyl)-phenyl | gelb (460) |
| 47 | 2-Methoxy-5-(ß-sulfatoethylsulfonyl)-phenyl | dito | dito | gelb |
| 48 | 4-(ß-Sulfatoethyl-sulfonyl)-phenyl | Carbo-methoxy | 4'-(ß-Thiosulfato-ethylsulfonyl)-phenyl | gelb (420) |
| 49 | 4-(ß-Sulfatoethyl-sulfonyl)-phenyl | Carboxy | 4'-(ß-Sulfato-ethylsulfonyl)-phenyl | gelb |

| Bsp. | Monoazoverbindung der Formel (A) Rest $D^2$ | Rest R | Rest K | Farbton ($\lambda_{max}$=..nm) |
|---|---|---|---|---|
| 50 | 2-Methoxy-5-(ß-sulfatoethylsulfonyl)-phenyl | Carboxy | 4'-(ß-Sulfatoethylsulfonyl)-phenyl | gelb (438) |
| 51 | 4-(ß-Sulfatoethylsulfonyl)-phenyl | Carbethoxy | 3'-(ß-Sulfatoethylsulfonyl)-phenyl | gelb (418) |
| 52 | 3-(ß-Sulfatoethylsulfonyl)-phenyl | dito | dito | gelb |
| 53 | 2-Methoxy-5-(ß-sulfatoethylsulfonyl)-phenyl | dito | dito | gelb |
| 54 | 2-Methoxy-5-methyl-4-(ß-sulfatoethylsulfonyl)-phenyl | dito | dito | gelb (440) |
| 55 | 2,5-Dimethoxy-4-(ß-sulfatoethylsulfonyl)-phenyl | dito | dito | gelb (455) |
| 56 | 2-Methoxy-4-(ß-sulfatoethylsulfonyl)-phenyl | dito | dito | gelb |
| 57 | 4-Methoxy-5-(ß-sulfatoethylsulfonyl)-phenyl | dito | dito | gelb |
| 58 | 2-Chlor-5-(ß-sulfatoethylsulfonyl)-phenyl | dito | dito | gelb |
| 59 | 2-Brom-4-(ß-sulfatoethylsulfonyl)-phenyl | dito | dito | gelb (412) |
| 60 | 2-Sulfo-3-(ß-sulfatoethylsulfonyl)-phenyl | dito | dito | gelb |
| 61 | 2-Carboxy-3-(ß-sulfatoethylsulfonyl)-phenyl | dito | dito | gelb |
| 62 | 2-Carboxy-4-(ß-sulfatoethylsulfonyl)-phenyl | dito | dito | gelb |
| 63 | 4-(ß-Sulfatoethylsulfonyl)-phenyl | dito | dito | gelb |

| Bsp. | Monoazoverbindung der Formel (A) Rest $D^2$ | Rest R | Rest K | Farbton ($\lambda_{max}$=..nm) |
|---|---|---|---|---|
| 64 | 3-(ß-Sulfatoethyl-sulfonyl)-phenyl | Carbo-methoxy | 3'-(ß-Sulfato-ethylsulfonyl)-phenyl | gelb (420) |
| 65 | 2-Methoxy-5-(ß-sul-fatoethylsulfonyl)-phenyl | dito | dito | gelb |
| 66 | 2-Methoxy-5-methyl-4-(ß-sulfatoethyl-sulfonyl)-phenyl | dito | dito | gelb (448) |
| 67 | 2,5-Dimethoxy-4-(ß-sulfatoethylsul-fonyl)-phenyl | dito | dito | gelb (454) |
| 68 | 2-Brom-4-(ß-sulfato-ethylsulfonyl)-phenyl | dito | dito | gelb (414) |
| 69 | 2-Sulfo-4-(ß-sulfatoethylsulfo-nyl)-phenyl | dito | dito | gelb |
| 70 | 4-(ß-Sulfatoethyl-sulfonyl)-phenyl | Carboxy | 4'-(ß-Sulfato-ethylsulfonyl)-phenyl | gelb (420) |
| 71 | 3-(ß-Sulfatoethyl-sulfonyl)-phenyl | dito | dito | gelb (418) |
| 72 | 2-Methoxy-5-(ß-sul-fatoethylsulfonyl)-phenyl | dito | dito | gelb (436) |
| 73 | 2-Methoxy-5-methyl-4-(ß-sulfatoethyl-sulfonyl)-phenyl | dito | dito | gelb (445) |
| 74 | 2,5-Dimethoxy-4-(ß-sulfatoethylsulfonyl)-phenyl | dito | dito | gelb (456) |
| 75 | 2-Methoxy-4-(ß-sul-fatoethylsulfonyl)-phenyl | dito | dito | gelb |
| 76 | 4-Methoxy-5-(ß-sul-fatoethylsulfonyl)-phenyl | dito | dito | gelb |
| 77 | 2-Brom-4-(ß-sulfato-ethylsulfonyl)-phenyl | dito | dito | gelb (412) |

| | Monoazoverbindung der Formel (A) | | | Farbton |
|---|---|---|---|---|
| Bsp. | Rest $D^2$ | Rest R | Rest K | ($\lambda_{max}$=..nm) |
| 78 | 2-Chlor-5-(ß-sulfatoethylsulfonyl)-phenyl | Carboxy | 4'-(ß-Sulfatoethylsulfonyl)-phenyl | gelb |
| 79 | 4-{N-[3'-(ß-sulfatoethylsulfonyl)-phenyl]-carbamoyl}-phenyl | dito | dito | gelb (427) |
| 80 | 4-(ß-Sulfatoethylsulfonyl)-phenyl | Carbethoxy | 2'-Brom-4'-(ß-sulfatoethylsulfonyl)-phenyl | gelb |
| 81 | 3-(ß-Sulfatoethylsulfonyl)-phenyl | dito | dito | gelb |
| 82 | 2-Brom-4-(ß-sulfatoethylsulfonyl)-phenyl | dito | dito | gelb |
| 83 | 2-Methoxy-5-(ß-sulfatoethylsulfonyl)-phenyl | dito | dito | gelb |
| 84 | 4-(ß-Sulfatoethylsulfonyl)-phenyl | Carboxy | 2'-Methoxy-5'-(ß-sulfatoethylsulfonyl)-phenyl | gelb |
| 85 | 2-Brom-4-(ß-sulfatoethylsulfonyl)-phenyl | dito | dito | gelb |

## Patentansprüche

### Patentansprüche für folgende Vertragsstaaten : BE, CH, DE, FR, GB, IT, LI

**1.** Eine wasserlösliche Monoazoverbindung entsprechend einer allgemeinen Formel (1)

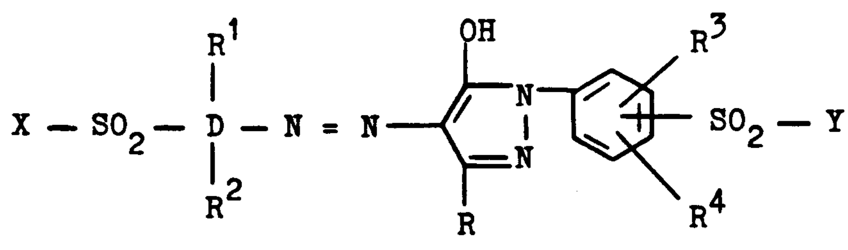

(1)

in welcher bedeuten:

D ist ein Benzolring oder ein Rest der allgemeinen Formel (2)

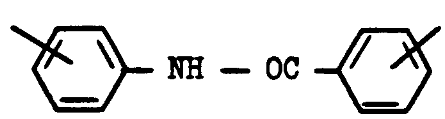

(2),

$R^1$ ist Wasserstoff, Methyl, Ethyl, Methoxy, Ethoxy, Chlor, Brom, Carboxy oder Sulfo,

$R^2$ ist Wasserstoff, Methyl, Ethyl, Methoxy, Ethoxy, Chlor oder Brom,

$R^3$ ist Wasserstoff, Methyl, Ethyl, Methoxy, Ethoxy, Chlor, Brom, Carboxy oder Sulfo und

$R^4$ ist Wasserstoff, Methyl, Ethyl, Methoxy, Ethoxy, Chlor oder Brom,

wobei $R^1$, $R^2$, $R^3$ und $R^4$ zueinander gleiche oder voneinander verschiedene Bedeutungen besitzen können;

R ist Carboxy oder Carbalkoxy von 2 bis 5 C-Atomen;

X ist eine $\beta$-Thiosulfatoethyl-Gruppe oder eine $\beta$-Sulfatoethyl-Gruppe oder

X ist die Vinylgruppe, wobei jedoch $R^1$ oder $R^3$ oder beide zwingend jeweils für eine Sulfogruppe stehen, und

Y ist eine $\beta$-Thiosulfatoethyl-Gruppe oder eine $\beta$-Sulfatoethyl-Gruppe oder

Y ist die Vinylgruppe, wobei jedoch $R^1$ oder $R^3$ oder beide zwingend jeweils für eine Sulfogruppe stehen,

wobei die beiden Gruppen $-SO_2-X$ und -SO-Y zueinander gleiche oder voneinander verschiedene Bedeutungen haben können.

**2.** Verbindung nach Anspruch 1, dadurch gekennzeichnet, daß X für die $\beta$-Sulfatoethyl-Gruppe steht.

**3.** Verbindung nach Anspruch 1 oder 2 oder nach Anspruch 1 und 2, dadurch gekennzeichnet, daß Y für die $\beta$-Sulfatoethyl-Gruppe steht.

**4.** Verbindung nach mindestens einem der Ansprüche 1 bis 3, dadurch gekennzeichnet, daß $R^1$ ein Wasserstoffatom ist.

**5.** Verbindung nach mindestens einem der Ansprüche 1 bis 3, dadurch gekennzeichnet, daß $R^1$ und $R^2$ beide ein Wasserstoffatom sind.

**6.** Verbindung nach mindestens einem der Ansprüche 1 bis 5, dadurch gekennzeichnet, daß $R^3$ ein Wasserstoffatom ist.

**7.** Verbindung nachmindestens einem der Ansprüche 1 bis 6, dadurch gekennzeichnet, daß $R^4$ ein Wasserstoffatom ist.

**8.** Verbindung nach Anspruch 1 entsprechend der allgemeinen Formel

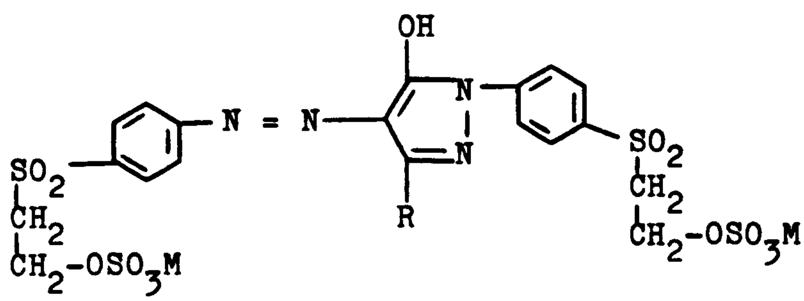

in welcher R eine Carboxygruppe oder Carbalkoxygruppe von 2 bis 5 C-Atomen ist und M für ein Wasserstoffatom oder ein Alkalimetall steht.

**9.** Verbindung nach Anspruch 8, dadurch gekennzeichnet, daß R die Carbethoxygruppe ist.

**10.** Verbindung nach Anspruch 8, dadurch gekennzeichnet, daß R eine Carboxygruppe ist.

**11.** Verfahren zur Herstellung einer in Anspruch 1 genannten und definierten Verbindung der allgemeinen Formel (1), dadurch gekennzeichnet, daß man ein Diazoniumsalz einer aromatischen Aminoverbindung entsprechend der allgemeinen Formel (3)

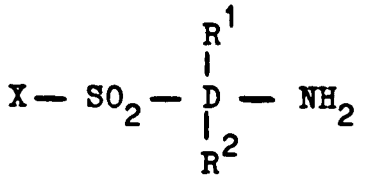

(3)

in welcher D, $R^1$, $R^2$ und X die in Anspruch 1 genannten Bedeutungen haben oder X für eine $\beta$-Hydroxyethyl-Gruppe steht, mit einer Verbindung entsprechend der allgemeinen Formel (4)

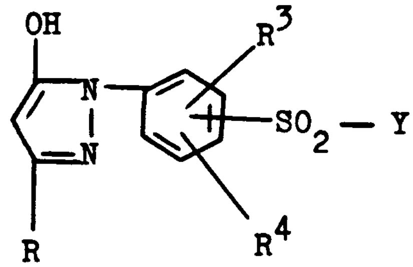

(4)

in welcher R, $R^3$, $R^4$ und Y die in Anspruch 1 genannten Bedeutungen haben oder Y für eine $\beta$-Hydroxyethyl-Gruppe steht, kuppelt und im Falle, daß X oder Y oder beide eine $\beta$-Hydroxyethyl-Gruppe bedeuten, in der erhaltenen Monoazoverbindung die $\beta$-Hydroxyethyl-Gruppe(n) in die $\beta$-Sulfatoethyl-Gruppe(n) mittels eines Sulfatisierungsmittels überführt.

**12.** Verfahren zur Herstellung einer Verbindung von Anspruch 1 entsprechend einer allgemeinen Formel (1a)

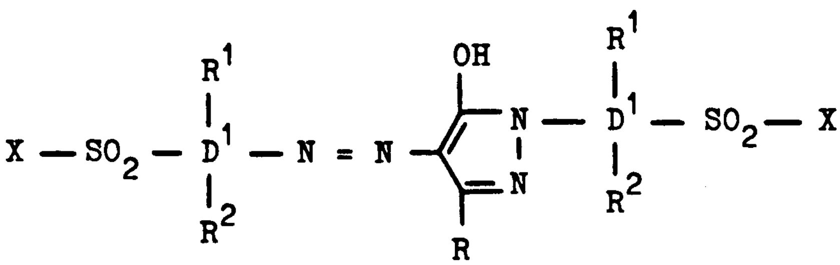

(1a)

in welcher R eine Carbalkoxygruppe von 2 bis 5 C-Atomen ist und beide $D^1$ jeweils einen Benzolring bedeuten und die Substituenten $R^1$, $R^2$ und $-SO_2-X$ an $D^1$ jeweils die in Anspruch 1 genannten Bedeutungen haben, wobei beide durch $R^1$, $R^2$ und $-SO_2-X$ substituierten Benzolreste eine zueinander identische Konstitution besitzen, dadurch gekennzeichnet, daß man ein Diazoniumsalz eines Amins der allgemeinen Formel (3a)

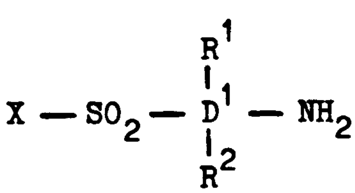

(3a)

mit $D^1$, $R^1$ $R^2$ und X der in Anspruch 1 genannten Bedeutung oder mit X gleich einer $\beta$-Hydroxyethyl-Gruppe in zweifach molarer Menge mit einem Acetylbernsteinsäuredialkylester mit Alkylgruppen von

jeweils 1 bis 4 C-Atomen umsetzt und im Falle, daß beide X β-Hydroxyethyl-Gruppen bedeuten, in der erhaltenen Monoazoverbindung die β-Hydroxyethyl-Gruppen in die β-Sulfatoethyl-Gruppen mittels eines Sulfatisierungsmittels überführt.

**13.** Verwendung einer Verbindung von mindestens einem der Ansprüche 1 bis 10 zum Färben (einschließlich Bedrucken) von hydroxy- und/oder carbonamidgruppenhaltigem Material, insbesondere Fasermaterial.

**14.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt und ihn mittels Wärme und/oder mittels eines säurebindenden Mittels fixiert, dadurch gekennzeichnet, daß man als Farbstoff eine Verbindung von mindestens einem der Anprüche 1 bis 10 einsetzt.

**Patentansprüche für folgenden Vertragsstaat : ES**

**1.** Verfahren zur Herstellung einer wasserlöslichen Monoazoverbindung entsprechend einer allgemeinen Formel (1)

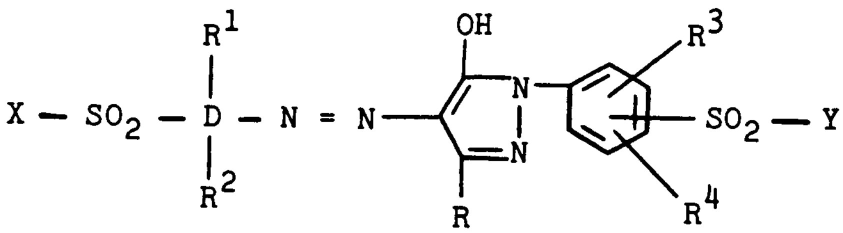

(1)

in welcher bedeuten:

D ist ein Benzolring oder ein Rest der allgemeinen Formel (2)

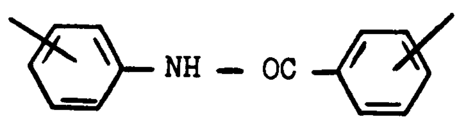

(2),

$R^1$ , ist Wasserstoff, Methyl, Ethyl, Methoxy, Ethoxy, Chlor, Brom, Carboxy oder Sulfo,
$R^2$ ist Wasserstoff, Methyl, Ethyl, Methoxy, Ethoxy, Chlor oder Brom,
$R^3$ ist Wasserstoff, Methyl, Ethyl, Methoxy, Ethoxy, Chlor, Brom, Carboxy oder Sulfo und
$R^4$ ist Wasserstoff, Methyl, Ethyl, Methoxy, Ethoxy, Chlor oder Brom,

wobei $R^1$, $R^2$, $R^3$ und $R^4$ zueinander glecihe oder voneinander verschiedene Bedeutungen besitzen können;

R ist Carboxy oder CArbalkoxy von 2 bis 5 C-Atomen;
X ist eine β-Thiosulfatoethyl-Gruppe oder eine β-Sulfatoethyl-Gruppe oder
X ist die Vinylgruppe, wobei jedoch $R^1$ oder $R^3$ oder beide zwingend jeweils für eine Sulfogruppe stehen, und
Y ist eine β-Thiosulfatoethyl-Gruppe oder eine β-Sulfatoethyl-Gruppe oder
Y ist die Vinylgruppe, wobei jedoch $R^1$ oder $R^3$ oder beide zwingend jeweils für eine Sulfogruppe stehen,

wobei die beiden Gruppen $-SO_2-X$ und $-SO_2-Y$ zueinander gleiche oder voneinander verschiedene Bedeutungen haben können,

dadurch gekennzeichnet, daß man ein Diazoniumsalz einer aromatischen Aminoverbindung entsprechend der allgemeinen Formel (3)

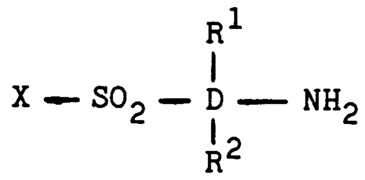

(3)

in welcher D, $R^1$, $R^2$ und X die oben genannten Bedeutungen haben oder X für eine β-Hydroxyethyl-Gruppe steht, mit einer Verbindung entsprechend der allgemeinen Formel (4)

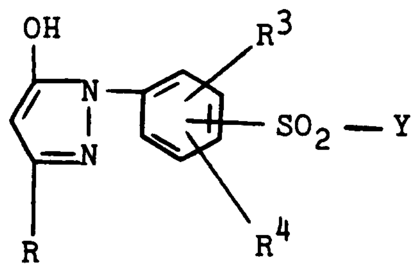

(4)

in welcher R, $R^3$, $R^4$ und Y die in oben genannten Bedeutungen haben oder Y für eine β-Hydroxyethyl-Gruppe steht, kuppelt und im Falle, daß X oder Y oder beide eine β-Hydroxyethyl-Gruppe bedeuten, in der erhaltenen Monoazoverbindung die β-Hydroxyethyl-Gruppe(n) in die β-Sulfatoethyl-Gruppe(n) mittels eines Sulfatisierungsmittels überführt.

**2.** Verfahren zur Herstellung einer Verbindung von Anspruch 1 entsprechend einer allgemeinen Formel (1a)

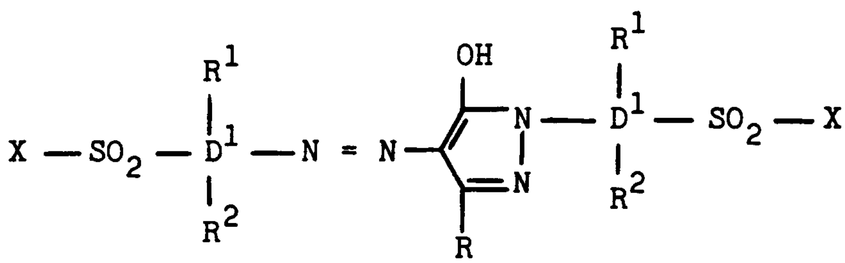

(1a)

in welcher R eine Carbalkoxygruppe von 2 bis 5 C-Atomen ist und beide $D^1$ jeweils einen Benzolring bedeuten und die Substituenten $R^1$, $R^2$ und $-SO_2-X$ an $D^1$ jeweils die in Anspruch 1 genannten Bedeutungen haben, wobei beide durch $R^1$, $R^2$ und $-SO_2-X$ substituierten Benzolreste eine zueinander identische Konstitution besitzen, dadurch gekennzeichnet, daß man ein Diazoniumsalz eines Amins der allgemeinen Formel (3a)

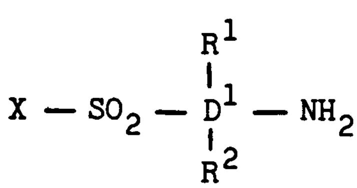

(3a)

mit $D^1$, $R^1$, $R^2$ und X der in Anspruch 1 genannten Bedeutung oder mit X gleich einer β-Hydroxyethyl-Gruppe in zweifach molarer Menge mit einem Acetylbernsteinsäuredialkylester mit Alkylgruppen von

jeweils 1 bis 4 C-Atomen umsetzt und im Falle, daß beide X β-Hydroxyethyl-Gruppen bedeuten, in der erhaltenen Monoazoverbindung die β-Hydroxyethyl-Gruppen in die β-Sulfatoethyl-Gruppen mittels eines Sulfatisierungsmittels überführt.

**3.** Verfahren nach Anspruch 1 oder 2, dadurch gekennzeichnet, daß X für die β-Sulfatoethyl-Gruppe steht.

**4.** Verfahren nach einem oder mehreren der Ansprüche 1 bis 3, dadurch gekennzeichnet, daß Y für die β-Sulfatoethyl-Gruppe steht.

**5.** Verfahren nach mindestens einem der Ansprüche 1 bis 4, dadurch gekannzeichnet, daß $R^1$ ein Wasserstoffatom ist.

**6.** Verfahren nach mindestens einem der Ansprüche 1 bis 4, dadurch gekennzeichnet, daß $R^1$ und $R^2$ beide ein Wasserstoffatom sind.

**7.** Verfahren nach mindestens einem der Ansprüche 1 bis 6, dadurch gekennzeichnet, daß $R^3$ ein Wasserstoffatom ist.

**8.** Verfahren nach mindestens einem der Anprüche 1 bis 7, dadurch gekennzeichnet, daß $R^4$ ein Wasserstoffatom ist.

**9.** Verfahren nach Anspruch 1 oder 2, dadurch gekennzeichnet, daß die Azoverbindung der Formel (1) bzw. (1a) eine Verbindung entsprechend der allgemeinen Formel

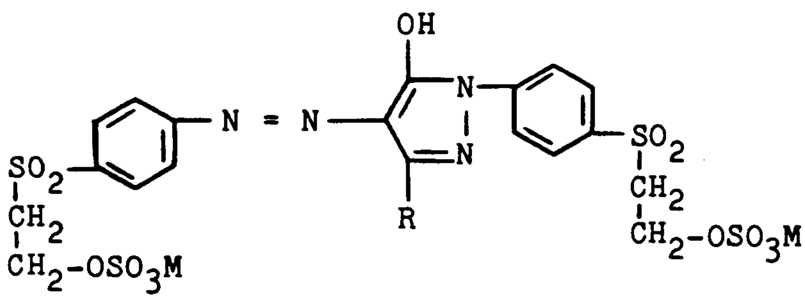

ist, in welcher R eine Carboxygruppe oder Carbalkoxygruppe von 2 bis 5 C-Atomen ist und M für ein Wasserstoffatom oder ein Alkalimetall steht.

**10.** Verfahren nach Anspruch 9, dadurch gekennzeichnet, daß R die Carbethoxygruppe ist.

**11.** Verfahren nach Anspruch 9, dadurch gekennzeichnet, daß R eine Carboxygruppe ist.

**12.** Verwendung einer Verbindung von mindestens einem der Ansprüche 1 bis 11 zum Färben (einschließlich Bedrucken) von hydroxy- und/oder carbonamidgruppenhaltigem Material, insbesondere Fasermaterial.

**13.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt und ihn mittels Wärme und/oder mittels eines säurebindenden Mittels fixiert, dadurch gekennzeichnet, daß man als Farbstoff eine Verbindung von mindestens einem der Ansprüche 1 bis 11 einsetzt.

## Claims

### Claims for the following Contracting States : BE, CH, DE, FR, GB, IT, LI

**1.** A water-soluble monoazo compound corresponding to a formula (1)

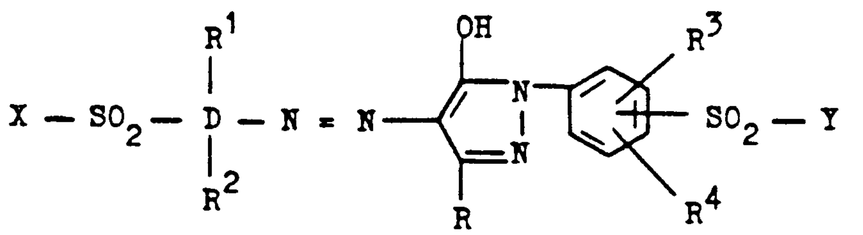

(1)

in which the symbols have the following meanings:
D is a benzene ring or a radical of the general formula (2)

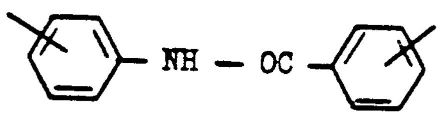

(2)

- $R^1$ is hydrogen, methyl, ethyl, methoxy, ethoxy, chlorine, bromine, carboxyl or sulfo,
- $R^2$ is hydrogen, methyl, ethyl, methoxy, ethoxy, chlorine or bromine,
- $R^3$ is hydrogen, methyl, ethyl, methoxy, ethoxy, chlorine, bromine, carboxyl or sulfo and
- $R^4$ is hydrogen, methyl, ethyl, methoxy, ethoxy, chlorine or bromine,

it being possible for $R^1$, $R^2$, $R^3$ and $R^4$ to have meanings identical with one another or different from one another;

- R is carboxyl or carboalkoxy having 2 to 5 carbon atoms;
- X is a ß-thiosulfatoethyl group or a ß-sulfatoethyl group or
- X is the vinyl group, it being, however, necessary for $R^1$ or $R^3$ or both of them to represent in each case a sulfo group, and
- Y is a β-thiosulfatoethyl group or a β-sulfatoethyl group, or
- Y is the vinyl group, it being, however, necessary for $R^1$ or $R^3$ or both of them to represent in each case a sulfo group,

and the two groups $-SO_2-X$ and $-SO_2-Y$ can have meanings identical with or different from one another.

**2.** A compound as claimed in claim 1, wherein X represents the β-sulfatoethyl group.

**3.** A compound as claimed in claim 1 or 2 or as claimed in claim 1 and 2, wherein Y represents the β-sulfatoethyl group.

**4.** A compound as claimed in at least one of claims 1 to 3, wherein $R^1$ is a hydrogen atom.

**5.** A compound as claimed in at least one of claims 1 to 3, wherein $R^1$ and $R^2$ are both a hydrogen atom.

**6.** A compound as claimed in at least one of claims 1 to 5, wherein $R^3$ is a hydrogen atom.

**7.** A compound as claimed in at least one of claims 1 to 6, wherein $R^4$ is a hydrogen atom.

**8.** A compound as claimed in claim 1, corresponding to the formula

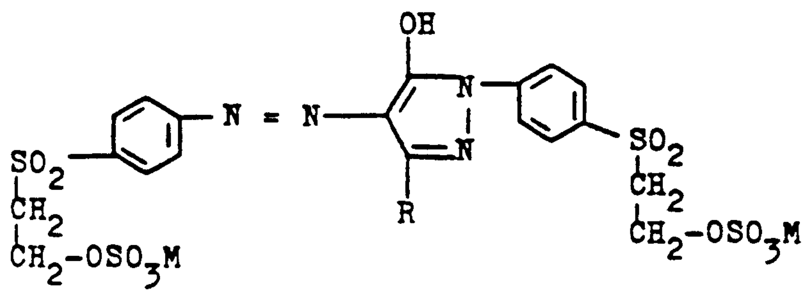

in which R is a carboxyl group or a carboalkoxy group having 2 to 5 carbon atoms and M represents a hydrogen atom or an alkali metal.

**9.** A compound as claimed in claim 8, wherein R is the carboethoxy group.

**10.** A compound as claimed in claim 8, wherein R is a carboxyl group.

**11.** A process for the preparation of a compound of the formula (1) mentioned and defined in claim 1, which comprises coupling a diazonium salt of an aromatic amino compound corresponding to the formula (3)

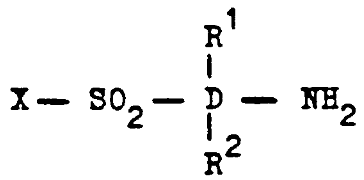

(3)

in which D, R', $R^2$ and X have the meanings mentioned in claim 1 or X represents a $\beta$-hydroxyethyl group, with a compound corresponding to the formula (4)

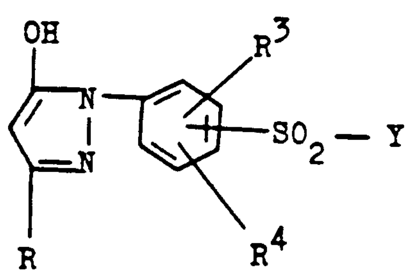

(4)

in which R, $R^3$, $R^4$ and Y have the meanings mentioned in claim 1 or Y represents a $\beta$-hydroxyethyl group, and, in the event that X or Y or both of them denote a $\beta$-hydroxyethyl group, converting the $\beta$-hydroxyethyl group(s) in the resulting monoazo compound into the $\beta$-sulfatoethyl group(s) by means of a sulfating agent.

**12.** A process for the preparation of a compound as claimed in claim 1 corresponding to a formula (1a)

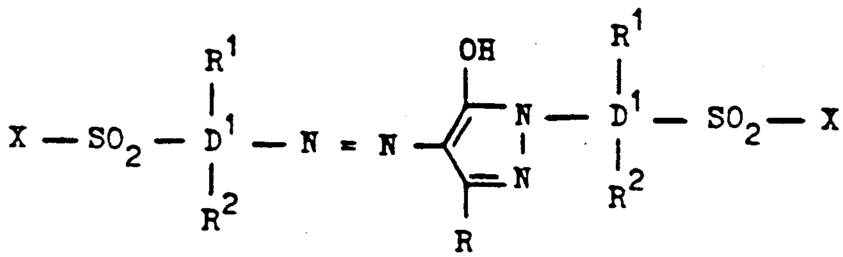

(1a)

in which R is a carboalkoxy group having 2 to 5 carbon atoms and both of the $D^1$s each denote a benzene ring and the substituents R', $R^2$ and $-SO_2-X$ on $D^1$ each have the meanings mentioned in claim 1, both of the benzene radicals substituted by $R^1$, $R^2$ and $-SO_2-X$ being structurally identical with one another, which comprises reacting a diazonium salt of an amine of the formula (3a)

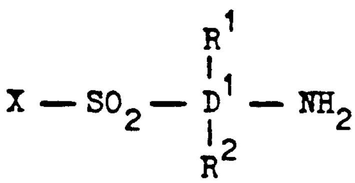

(3a)

in which $D^1$, $R^1$, $R^2$ and X have the meaning mentioned in claim 1 or in which X is a $\beta$-hydroxyethyl group, in a twice-molar amount with a dialkyl acetylsuccinate having alkyl groups with 1 to 4 carbon atoms in each case, and, in the event that both Xs denote $\beta$-hydroxyethyl groups, converting the $\beta$-hydroxyethyl groups in the resulting monoazo compound into $\beta$-sulfatoethyl groups by means of a sulfating agent.

**13.** The use of a compound as claimed in at least one of claims 1 to 10 for dyeing (including printing) material, in particular fiber material, containing hydroxyl and/or carboxamide groups.

**14.** A process for dyeing (including printing) material, in particular fiber material, containing hydroxyl and/or carboxamide groups, in which a dyestuff is applied to the material and is fixed by means of heat and/or by means of an acid-binding agent, wherein the dyestuff employed is a compound as claimed in at least one of claims 1 to 10.

**Claims for the following Contracting State : ES**

**1.** A process for the preparation of a water-soluble monoazo compound corresponding to a formula (1)

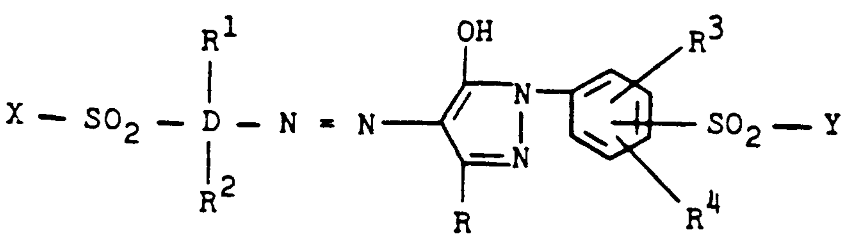

(1)

in which the symbols have the following meanings:
D is a benzene ring or a radical of the general formula (2)

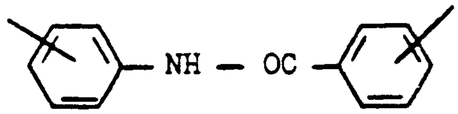

(2)

$R^1$ is hydrogen, methyl, ethyl, methoxy, ethoxy, chlorine, bromine, carboxyl or sulfo,
$R^2$ is hydrogen, methyl, ethyl, methoxy, ethoxy, chlorine or bromine,
$R^3$ is hydrogen, methyl, ethyl, methoxy, ethoxy, chlorine, bromine, carboxyl or sulfo and
$R^4$ is hydrogen, methyl, ethyl, methoxy, ethoxy, chlorine or bromine,

it being possible for $R^1$, $R^2$, $R^3$ and $R^4$ to have meanings identical with one another or different from one another;

R is carboxyl or carboalkoxy having 2 to 5 carbon atoms;
X is a $\beta$-thiosulfatoethyl group or a $\beta$-sulfatoethyl group or
X is the vinyl group, it being, however, necessary for $R^1$ or $R^3$ or both of them to represent in each case a sulfo group, and
Y is a $\beta$-thiosulfatoethyl group or a $\beta$-sulfatoethyl group, or
Y is the vinyl group, it being, however, necessary for $R^1$ or $R^3$ or both of them to represent in each case a sulfo group,

and the two groups $-SO_2-X$ and $-SO_2-Y$ can have meanings identical with or different from one another, which comprises coupling a diazonium salt of an aromatic amino compound corresponding to the formula (3)

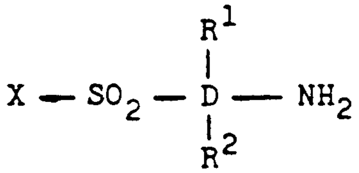

(3)

in which D, $R^1$, $R^2$ and X have the meanings mentioned above or X represents a $\beta$-hydroxyethyl group, with a compound corresponding to the formula (4)

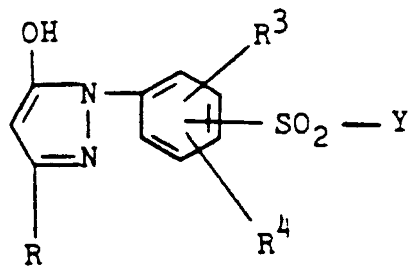

(4)

in which R, $R^3$, $R^4$ and Y have the meanings mentioned above or Y represents a $\beta$-hydroxyethyl group, and, in the event that X or Y or both of them denote a $\beta$-hydroxyethyl group, converting the $\beta$-hydroxyethyl group(s) in the resulting monoazo compound into the $\beta$-sulfatoethyl group(s) by means of a sulfating agent.

2. A process for the preparation of a compound as claimed in claim 1 corresponding to a formula (1a)

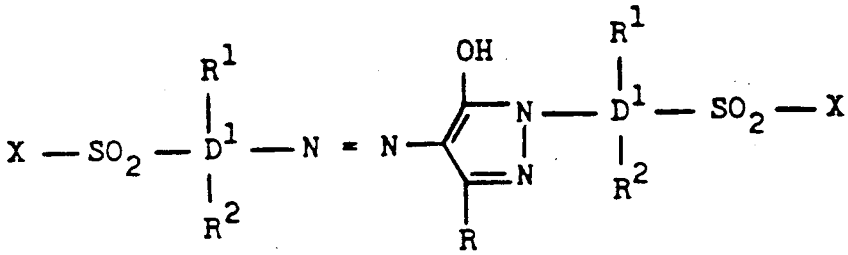

(1a)

in which R is a carboalkoxy group having 2 to 5 carbon atoms and both of the $D^1$s each denote a benzene ring and the substituents $R^1$, $R^2$ and $-SO_2-X$ on $D^1$ each have the meanings mentioned in claim 1, both of the benzene radicals substituted by $R^1$, $R^2$ and $-SO_2-X$ being structurally identical with one another, which comprises reacting a diazonium salt of an amine of the formula (3a)

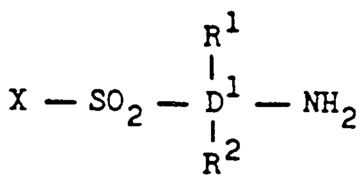

(3a)

in which $D^1$, $R^1$, $R^2$ and X have the meaning mentioned in claim 1 or in which X is a β-hydroxyethyl group, in a twice-molar amount with a dialkyl acetylsuccinate having alkyl groups with 1 to 4 carbon atoms in each case, and, in the event that both Xs denote β-hydroxyethyl groups, converting the β-hydroxyethyl groups in the resulting monoazo compound into β-sulfatoethyl groups by means of a sulfating agent.

3. The process as claimed in claim 1 or 2, wherein X represents the β-sulfatoethyl group.

4. The process as claimed in one or more of claims 1 to 3, wherein Y represents the β-sulfatoethyl group.

5. The process as claimed in at least one of claims 1 to 4, wherein $R^1$ is a hydrogen atom.

6. The process as claimed in at least one of claims 1 to 4, wherein $R^1$ and $R^2$ are both a hydrogen atom.

7. The process as claimed in at least one of claims 1 to 6, wherein $R^3$ is a hydrogen atom.

8. The process as claimed in at least one of claims 1 to 7, wherein $R^4$ is a hydrogen atom.

**9.** The process as claimed in claim 1 or 2, wherein the azo compound of the formula (1) or (1a) is a compound corresponding to the formula

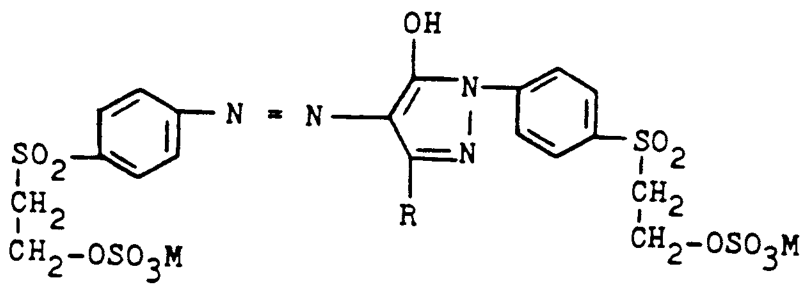

in which R is a carboxyl group or a carboalkoxy group having 2 to 5 carbon atoms and M represents a hydrogen atom or an alkali metal.

**10.** The process as claimed in claim 9, wherein R is the carboethoxy group.

**11.** The process as claimed in claim 9, wherein R is a carboxyl group.

**12.** The use of a compound as claimed in at least one of claims 1 to 11 for dyeing (including printing) material, in particular fiber material, containing hydroxyl and/or carboxamide groups.

**13.** A process for dyeing (including printing) material, in particular fiber material, containing hydroxyl and/or carboxamide groups, in which a dyestuff is applied to the material and is fixed by means of heat and/or by means of an acid-binding agent, wherein the dyestuff employed is a compound as claimed in at least one of claims 1 to 11.

**Revendications**

**Revendications pour les Etats contractants suivants : BE, CH, DE, FR, GB, IT, LI**

**1.** Composé monoazoîque hydrosoluble, répondant à une formule générale (1)

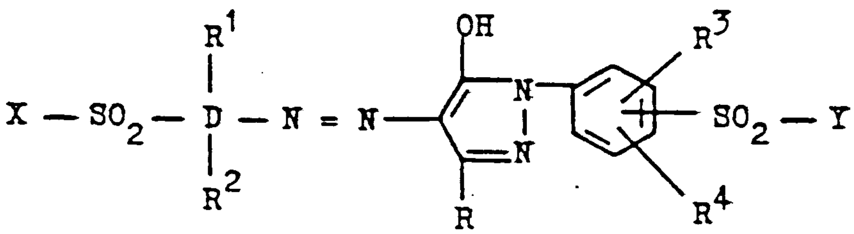

(1)

dans laquelle :
D représente un noyau benzénique ou un reste de formule générale (2)

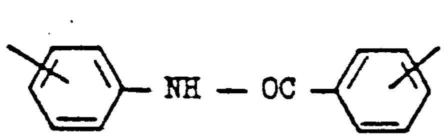

(2),

$R^1$ représente un atome d'hydrogène, un groupe méthyle, éthyle, méthoxy, éthoxy, un atome de chlore ou de brome ou un groupe carboxy ou sulfo,

$R^2$ représente un atome d'hydrogène, un groupe méthyle, éthyle, méthoxy, éthoxy, un atome de chlore ou de brome,

$R^3$ représente un atome d'hydrogène, un groupe méthyle, éthyle, méthoxy, éthoxy, un atome de

chlore ou de brome, un groupe carboxy ou sulfo et,

$R^4$ représente un atome d'hydrogène, un groupe méthyle, éthyle, méthoxy, éthoxy, un atome de chlore ou de brome,

les symboles $R^1$, $R^2$ $R^3$ et $R^4$ pouvant posséder des sens identiques ou différer de l'un à l'autre ;

R représente un groupe carboxy ou carboalcoxy comportant 1 à 5 atomes de carbone;

X représente un groupe $\beta$-thiosulfatoéthyle ou un groupe ß- sulatoéthyle, ou bien,

X représente le groupe vinyle, mais $R^1$ ou $R^3$ ou bien $R^1$ et $R^3$, doit ou doivent obligatoirement représenter chacun un groupe sulfo, et,

Y représente un groupe $\beta$-thiosulfatoéthyle ou un groupe $\beta$-sulfatoéthyle, ou bien,

Y représente le groupe vinyle, mais $R^1$ ou $R^3$, ou bien $R^1$ et $R^3$, doit ou doivent obligatoirement représenter alors chacun un groupe sulfo, et les deux groupes $-SO_2$-X et $-SO_2$-Y ont les mêmes sens ou ont des sens différents l'un de l'autre.

**2.** Composé selon la revendication 1 caractérisé en ce que X représente le groupe $\beta$- sulatoéthyle.

**3.** Composé selon la revendication 1 ou 2 ou selon les revendications 1 et 2, caractérisé en ce que Y représente le groupe $\beta$-sulfatoéthyle.

**4.** Composé selon l'une au moins des revendications 1 à 3, caractérisé en ce que R1 représente un atome d'hydrogène.

**5.** Composé selon l'une au moins des revendications 1 à 3, caractérisé en ce que les symboles R1 et R2 représentent tous deux, chacun, un atome d'hydrogène.

**6.** Composé selon l'une au moins des revendications 1 à 5, caractérisé en ce que R3 représente un atome d'hydrogène.

**7.** Composé selon l'une au moins des revendications 1 à 6, caractérisé en ce que R4 représente un atome d'hydrogène.

**8.** Composé selon la revendication 1 répondant à la formule générale

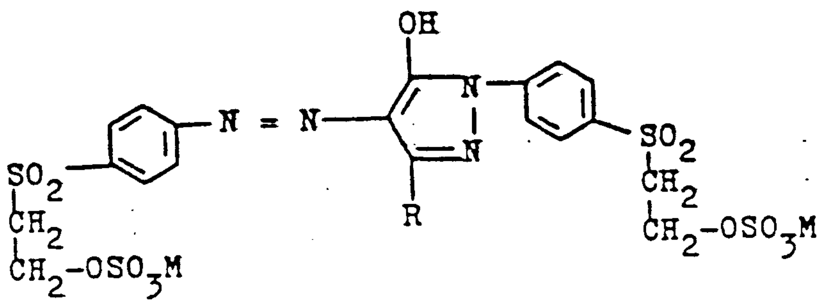

dans laquelle R représente un groupe carboxy ou un groupe carbalcoxy ayant 2 à 5 atomes de carbone, et M représente un atome d'hydrogène ou un métal alcalin.

**9.** Composé selon la revendication 8, caractérisé en ce que R représente le groupe carbéthoxy.

**10.** Composé selon la revendication 8, caractérisé en ce que R représente un groupe carboxy.

**11.** Procédé pour préparer un composé de formule générale (1), cité et défini à la revendication 1, procédé caractérisé en ce qu'on copule un sel de diazonium dérivant d'une amine aromatique répondant à la formule générale (3)

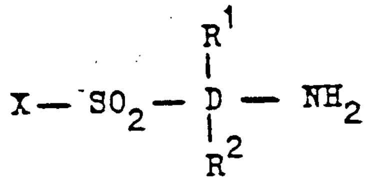

(3)

[dans laquelle D, $R^1$; $R^2$ et X ont les sens indiqués à la revendication 1, ou bien X représente un groupe $\beta$-hydroxyéthyle] avec un composé répondant à la formule générale (4)

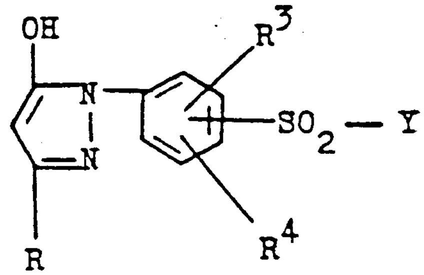

(4)

[dans laquelle R, $R^3$, $R^4$ et Y ont les sens indiqués à la revendication 1, ou bien Y représente un groupe $\beta$-hydroxyéthyle] et, si X ou Y, ou bien X et Y, représente(nt) chacun un groupe $\beta$-hydroxyéthyle, on transforme, à l'aide d'un agent de sulfatation, dans le composé monoazoïque ainsi obtenu, le ou les groupes (s) $\beta$-hydroxyéthyle en le ou les groupes $\beta$-sulfatoéthyle.

**12.** Procédé pour préparer un composé selon la revendication 1, répondant à une formule générale (1a)

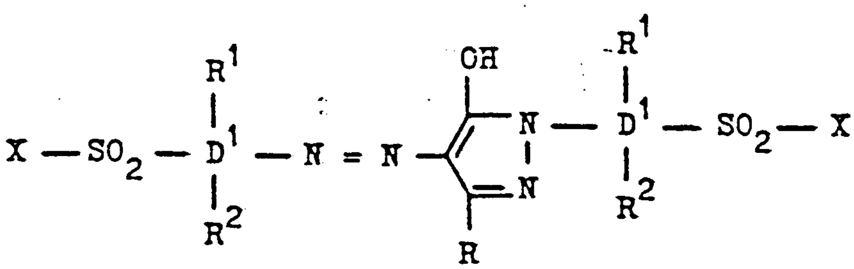

(1a)

[dans laquelle R représente un groupe carbalcoxy ayant 2 à 5 atomes de carbone, et les D1 représentent chacun un noyau benzénique, et les substituants $R^1$, $R^2$, et -SO2-X de D1 ont chaque fois les sens indiqués à la revendication 1 , les deux noyaux benzéniques substitués par $R^1$, $R^2$, -SO2-X ayant une structure identique l'un à l'autre ], procédé en ce qu'on fait réagir en une quantité molaire double un sel de diazonium d'une amine de formule générale (3a)

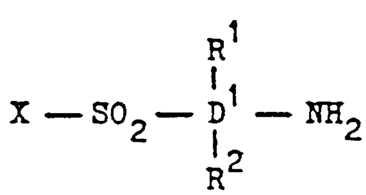

(3a)

[dans laquelle D1, $R^1$, $R^2$ et X ont le sens indiqué à la revendication 1, ou bien X représente un groupe $\beta$-hydroxyéthyle] avec un acétyl succinate de dialkyle comportant des groupes alkyles ayant chacun 1 à 4 atomes de carbone ] et , si les deux symboles X représentent chacun un groupe $\beta$hydroxyéthyle, on transforme à l'aide d'un agent de sulfatation, dans le composé monoazoïque ainsi obtenu, les groupes $\beta$-hydroxyéthyle en des groupes $\beta$-sulfatoéthyles.

**13.** Utilisation d'un composé répondant à l'une au moins des revendications 1 à 10 pour teindre (ce qui comprend l'impression) une matière, notamment une matière fibreuse, contenant des groupes hydroxy et/ou carboxamides.

**14.** Procédé pour teindre (ce qui comprend l'impression) de la matière, notamment une matière fibreuse contenant des groupes hydroxy et/ou carboxamides, procédé selon lequel on applique un colorant sur la matière et on l'y fixe à l'aide de la chaleur et/ou à l'aide d'un agent de fixation des acides, procédé caractérisé en ce qu'on utilise comme colorant un composé selon l'une au moins des revendications 1 à 10.

**Revendication pour les Etats contractants suivants : ES**

**1.** Procédé pour préparer un composé monoazoïque hydrosoluble, répondant à une formule générale (1) :

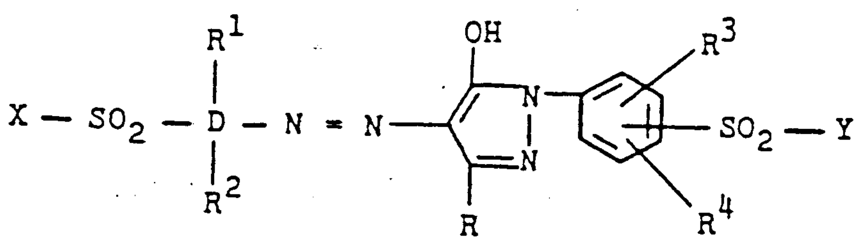

(1)

dans laquelle :
D représente un noyau benzénique ou un reste de formule générale (2) :

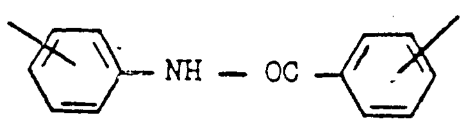

(2),

$R^1$ représente un atome d'hydrogène, un groupe métnyle, éthyle, méthoxy, éthoxy, un atome de chlore ou de brome ou un groupe carboxy ou sulfo,

$R^2$ représente un atome d'hydrogène, un groupe méthyle, éthyle, méthoxy, éthoxy, un atome de chlore ou de brome,

$R^3$ représente un atome d'hydrogène, un groupe méthyle, éthyle, méthoxy, éthoxy, un atome de chlore ou de brome, un groupe carboxy ou sulfo et,

$R^4$ représente un atome d'hydrogène, un groupe méthyle, éthyle, méthoxy, éthoxy, un atome de chlore ou de brome,

les symboles $R^1$, $R^2$, $R^3$ et $R^4$ pouvant posséder des sens identiques ou différer de l'un de l'autre ;

R représente un groupe carboxy ou carboalcoxy comportant 1 à 5 atomes de carbone ;

X représente un groupe $\beta$-thiosulfatoéthyle ou un groupe $\beta$- sulatoéthyle, ou bien ,

X représente le groupe vinyle, mais, $R^1$ ou $R^3$ ou bien $R^1$ et $R^3$, doit ou doivent alors obligatoirement représenter chacun un groupe sulfo, et ,

Y représente un groupe $\beta$-thiosulfatoéthyle ou un groupe $\beta$-sulfatoéthyle, ou bien,

Y représente le groupe vinyle, mais $R^1$ ou $R^3$, ou bien $R^1$ et $R^3$ doit ou doivent obligatoirement représenter alors chacun un groupe sulfo, les deux groupes -SO2-X et -$SO_2$-Y pouvant avoir les mêmes sens ou différer l'un de l'autre,

procédé caractérisé en ce qu'on copule un sel de diazonium d'une amine aromatique répondant à la formule générale (3)

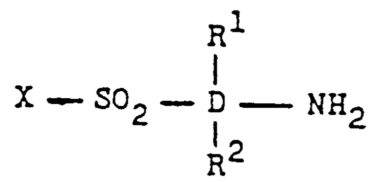

(3)

[dans laquelle D, $R^1$, $R^2$ et X ont les sens précités, ou bien X représente un groupe $\beta$-hydroxyéthyle] avec un composé répondant à la formule générale (4)

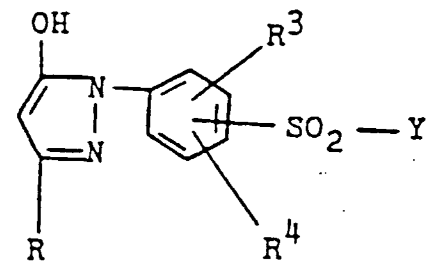

(4)

[dans laquelle R, $R^3$, $R^4$ et Y ont les sens indiqués cidessus, ou bien Y représente un groupe $\beta$-hydroxyéthyle] et, si X ou Y, ou bien X et Y, représente (nt) chacun un groupe $\beta$-hydroxyéthyle, on transforme à l'aide d'un agent de sulfatation, dans le composé monoazoïque obtenu, le ou les groupes $\beta$-hydroxyéthyles en le ou les groupes $\beta$-sulfatoéthyles.

2. Procédé pour préparer un composé selon la revendication 1, répondant à la formule générale (1a)

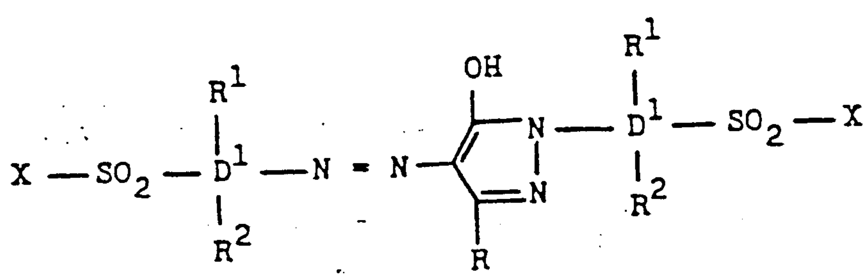

(1a)

[dans laquelle R représente un groupe carbalcoxy ayant 2 à 5 atomes de carbone et les deux symboles D1 représentent chacun un noyau benzénique, et les substituants $R^1$, $R^2$, et $-SO_2$-X fixés sur D1 ont chaque fois les sens indiqués à la revendication 1, les deux restes benzéniques substitués par $R^1$, $R^2$ et $-SO_2$-X ayant une structure de constitution identique de l'un à l'autre ], procédé caractérisé en ce qu'on fait réagir un sel de diazonium d'une amine de formule générale (3a)

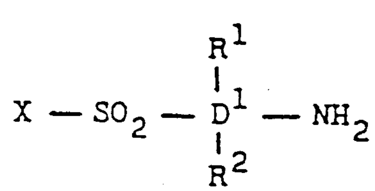

(3a)

[dans laquelle $D^1$, $R^1$, $R^2$ et X ont le sens indiqué à la revendication 1, ou bien X représente un groupe $\beta$-hydroxyéthyle], en une quantité molaire double avec un acétyl succinate de dialkyle comportant des groupes alkyles ayant chacun 1 à 4 atomes de carbone et, si les deux X représentent chacun un groupe $\beta$-hydroxyéthyle, on transforme à l'aide d'un agent de sulfatation, dans le composé monoazoïque obtenu, les groupes $\beta$-hydroxyéthyles en les groupes $\beta$-sulfatoéthyles.

**3.** Procédé selon la revendication 1 ou 2, caractérisé en ce que X représente le groupe β-sulfatoéthyle.

**4.** Procédé selon une ou plusieurs des revendications 1 à 3, caractérisé en ce que Y représente le groupe β-sulfatoéthyle.

**5.** Procédé selon l'une au moins des revendications 1 à 4, caractérisé en ce que R1 représente un atome d'hydrogène.

**6.** Procédé selon l'une au moins des revendications 1 à 4, caractérisé en ce que R1 et R2 représentent chacun un atome d'hydrogène.

**7.** Procédé selon l'un au moins des revendications 1 à 6, caractérisé en ce que $R^3$ représente un atome d'hydrogène.

**8.** Procédé selon l'une au moins des revendications 1 à 7, caractérisé en ce que $R^4$ représente un atome d'hydrogène.

**9.** Procédé selon la revendication 1 ou 2, caractérisé en ce que le composé azoïque de formule (1) ou (1a) est un composé répondant à la formule générale :

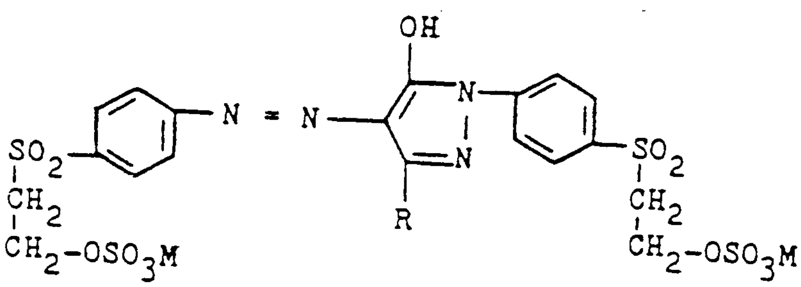

dans laquelle
R représente un groupe carboxy ou carbalcoxy ayant 1 à 5 atomes de carbone, et M représente un atome d'hydrogène ou un métal alcalin.

**10.** Procédé selon la revendication 9, caractérisé en ce que R représente le groupe carbéthoxy.

**11.** Procédé selon la revendication 9, caractérisé en ce que R représente un groupe carboxy.

**12.** Utilisation d'un composé répondant à l'une au moins des revendications 1 à 11 pour teindre (ce qui comprend l'impression) une matière, notamment une matière fibreuse, contenant des groupes hydroxy et/ou carboxamides.

**13.** Procédé pour teindre (ce qui comprend l'impression) une matière, notamment une matière fibreuse, contenant des groupes hydroxy et/ou carboxamides, procédé selon lequel on applique un colorant sur la matière et on l'y fixe à l'aide de la chaleur et/ou à l'aide d'un agent de fixation des acides, procédé caractérisé en ce qu'on utilise comme colorant un composé selon l'une au moins des revendications 1 à 11.